# EUROPÄISCHE PATENTSCHRIFT

(11) **EP 0 610 865 B1**
(45) Veröffentlichungstag und Bekanntmachung des Hinweises auf die Patenterteilung: **26.11.1997**
(21) Anmeldenummer: 94101837.6
(22) Anmeldetag: 07.02.1994
(51) Int. Cl.: G01M 1/02, G01M 1/08

(54) **Beleuchtungseinrichtung für eine Radauswuchtmaschine**
Lighting device for a wheel balancing machine
Dispositif d'éclairage pour une machine d'équilibrage de roue

(30) Priorität: 12.02.1993 DE 9302023 U
(43) Veröffentlichungstag der Anmeldung: 17.08.1994
(73) Patentinhaber: HOFMANN WERKSTATT-TECHNIK GMBH, D-64319 Pfungstadt (DE)
(72) Erfinder: Rothamel, Karl, 64342 Seeheim-Jugenheim (DE)
(74) Vertreter: Nöth, Heinz, Dipl.-Phys.

(56) Entgegenhaltungen:
- EP-A- 0 565 320
- DE-A- 4 101 921
- DE-B- 2 163 845
- FR-A- 2 674 331
- PATENT ABSTRACTS OF JAPAN vol. 6, no. 41 (P-106) 13. März 1982 & JP-A-56 157 829 (TAKAMINE SEISAKUSHO KK) 5. Dezember 1981

## Beschreibung

Die Erfindung betrifft eine Radauswuchtmaschine nach dem Oberbegriff des Patentanspruches 1.

Aus der DE-B-21 63 845 ist eine derartige Radauswuchtmaschine bekannt, bei welcher der Festpunkt am Felgenhorn des Kraftfahrzeugrades, an dem das Unwuchtausgleichsgewicht angebracht werden soll, mit Hilfe eines Lichtstrahls einer Beleuchtungseinrichtung markiert wird. Der Lichtstrahl kann dabei auch den Bereich ausleuchten, der oberhalb des Festpunktes liegt.

Nach dem Aufspannen des Kraftfahrzeugrades auf das Wellenende der Radauswuchtmaschine dringt in die dem Auswuchtmaschinengehäuse zugewandte Felgenschüssel nur wenig Umgebungslicht. Wenn das Scheibenrad schwarz lackiert ist, ergibt sich eine noch zusätzliche Verschlechterung der Lichtverhältnisse. Hierdurch ist das Anbringen von Klebegewichten, insbesondere von verdeckten Klebegewichten, die das äußere Erscheinungsbild des Scheibenrades nicht beeinflussen, erschwert.

Aufgabe der Erfindung ist es daher, eine Radauswuchtmaschine zu schaffen, bei der das positionsgerechte Einsetzen von Klebegewichten in die Felgenschüssel des aufgespannten Kraftfahrzeugrades erleichtert ist.

Diese Aufgabe wird erfindungsgemäß durch die Merkmale des Patentanspruches 1 gelöst.

Auf diese Weise ist es möglich, im ausgeleuchteten Bereich die Form des Scheibenrades bzw. der Felgenschüssel genau zu erkennen. Der ausgeleuchtete Bereich liegt oberhalb dem aus dem Maschinengehäuse ragenden Wellenende der Hauptwelle. In diesem Bereich werden die Ausgleichsgewichte in das Scheibenrad bzw. die Felge eingesetzt, nachdem das Kraftfahrzeugrad nach dem Unwuchtmeßvorgang in die entsprechende Ausgleichsposition eingedreht worden ist. Da nunmehr dieser Bereich ausgeleuchtet ist, läßt sich das Ausgleichsgewicht in der entsprechenden Ausgleichsebene im ausgeleuchteten Felgenschüsselbereich, beispielsweise durch Kleben, befestigen. Auf diese Weise lassen sich auch sogenannte versteckte Gewichte positionsgerecht am Scheibenrad befestigen. Die Beleuchtungseinrichtung kann am Maschinenrahmen befestigt sein.

Ein Blenden der Bedienungsperson durch die Beleuchtungseinrichtung wird dadurch vermieden, daß der über dem ausgeleuchteten Bereich liegende Raum ausgeblendet wird.

Die Beleuchtungseinrichtung kann eine Glühbirne aufweisen, deren Licht mit Hilfe eines Reflektors in den Ausleuchtbereich gerichtet wird. Zum Einschalten der Beleuchtungseinrichtung kann der Hauptschalter der Maschine dienen. Es ist jedoch auch möglich, einen Schalter, insbesondere elektronischen Schalter, vorzusehen, der abhängig von einer in der Meß- und erelektronik der Auswuchtmaschine festgestellten Arbeits- bzw. Betriebssituation die Beleuchtungseinrichtung ein- oder ausschaltet. Beispielsweise kann der Schalter, abhängig von der gewählten Gewichteplazierung, dem Auszug der Taststange, dem Eindrehwinkel der Hauptwelle und dem Spannzustand einer Kraftspanneinrichtung angesteuert werden und die Beleuchtungseinrichtung dann eingeschaltet werden, wenn ein Kraftfahrzeugrad auf das Wellenende aufgespannt ist.

Anhand der Figuren wird an einem Ausführungsbeispiel die Erfindung noch näher erläutert. Es zeigt:
- Figur 1:: eine Ansicht von oben auf ein Ausführungsbeispiel; und

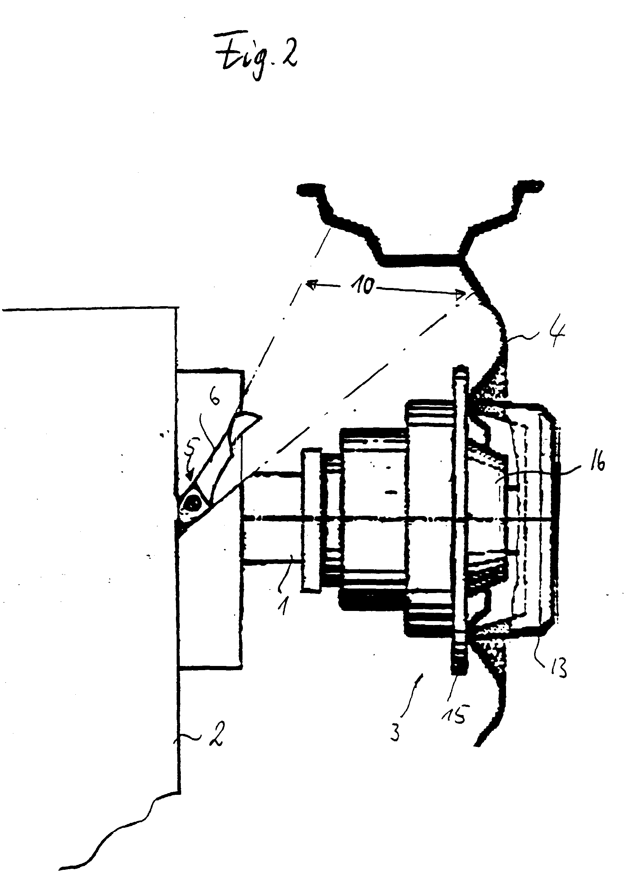

- Figur 2:: eine Ansicht von der Seite, insbesondere Rückseite des Ausführungsbeispiels in der Figur 1.

Von dem Ausführungsbeispiel der Radauswuchtmaschine ist das Maschinengehäuse in dem Bereich gezeigt, in welchem ein Wellenende 1 der Hauptwelle aus dem Maschinengehäuse ragt. Die Hauptwelle ist im Maschinengehäuse 2 in einer nicht näher dargestellten Unwuchtmeßanordnung in bekannter Weise (z.B.DE-AS 27 01 876) gelagert. Am aus dem Maschinengehäuse 2 ragenden Wellenende 1 kann mit Hilfe einer Spanneinrichtung 3 ein Kraftfahrzeugrad 4, von welchem das Scheibenrad schematisch in den Figuren dargestellt ist, zentrisch aufgespannt werden. Die Spanneinrichtung beinhaltet hierzu im wesentlichen einen Aufspannflansch 15, einen Zentrierkonus 16 und einen Aufspanntopf 13.

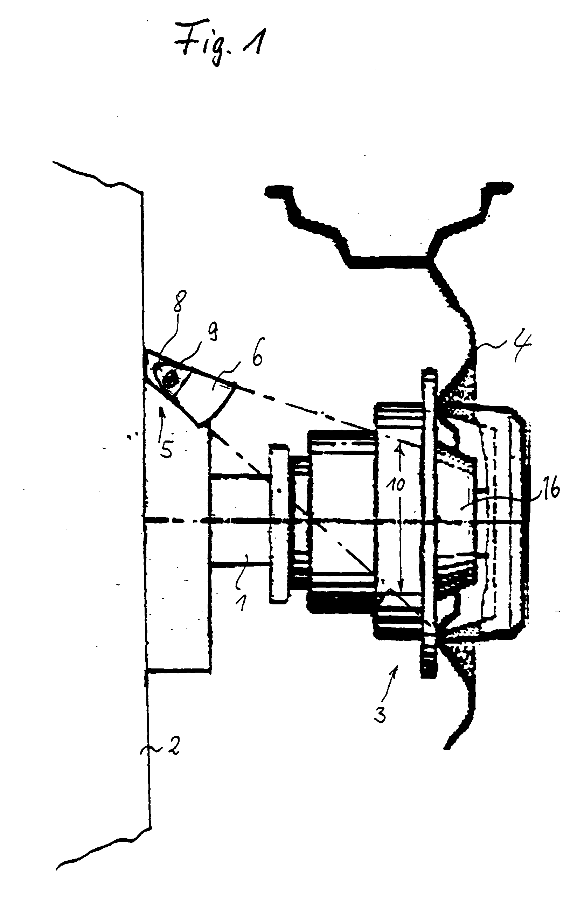

Zum Ausleuchten eines Ausleuchtbereiches 10, der senkrecht über dem aus dem Maschinengehäuse 2 ragenden Wellenende 1 liegt, dient eine Beleuchtungseinrichtung 5. Diese Beleuchtungseinrichtung 5 kann, wie aus der Figur 1 zu ersehen ist, hinter dem Wellenende 1 am Maschinengehäuse 2 befestigt sein.

Die Beleuchtungseinrichtung 5 besteht im wesentlichen aus einer Glühlampe 9 und einem Reflektor 8, welcher das von der Glühlampe 9 ausgesendete Licht in den Ausleuchtbereich 10 richtet. Durch eine Blende 6 ist gewährleistet, daß die Bedienungsperson durch das ausgesendete Licht nicht geblendet wird. Der Ausleuchtbereich 10 ist so angeordnet, daß am montierten Kraftfahrzeugrad 4 der innen liegende Felgenschüsselbereich, welcher senkrecht über dem Wellenende 1 liegt, beleuchtet wird. Beim Unwuchtausgleich werden die Ausgleichswinkellagen des Kraftfahrzeugrades in diese Stellung gebracht, und die Ausgleichsgewichte werden in den dafür vorgesehenen Ausgleichsebenen in diesen eingedrehten Ausgleichswinkellagen befestigt. Da dieser Ausgleichswinkellagenbereich ausgeleuchtet ist, wird das genaue Anbringen der Ausgleichsgewichte, insbesondere wenn es sich um verdeckt in der Felgenschüssel anzuordnende Ausgleichsgewichte handelt, erheblich erleichtert.

Zum Einschalten der Beleuchtungseinrichtung 5 kann ein Schalter 12, der als elektronischer Schalter ausgebildet sein kann, dienen. Dieser Schalter 12 wird über die elektronische Meß- und Steuereinrichtung der Auswuchtmaschine abhängig von folgenden Betriebszuständen geschaltet:
a) bei gewählten Gewichteplazierungen fur Klebegewichte
b) bei Verlassen der Ruhelage der Abstand-Durchmesser-Taststange
c) bei Maschinen mit Kraftspanneinrichtung nur bei gespanntem Rad.

Es ist auch möglich, daß durch den Hauptschalter der Maschine die Beleuchtungseinrichtung 5 eingeschaltet wird. Ferner ist es möglich, daß von der nicht näher dargestellten Meß- und Steuerelektronik der Radauswuchtmaschine eine Arbeitspause erkannt wird und dann die Beleuchtungseinrichtung 5 ausgeschaltet wird.

## Patentansprüche

1. Radauswuchtmaschine mit einer Hauptwelle, die in einer in einem Maschinengehäuse (2) angeordneten Unwuchtmeßanordnung gelagert ist und von der aus dem Maschinengehäuse ein Wellenende (1) ragt, an welchem mittels einer Spanneinrichtung ein Kraftfahrzeugrad (4) befestigbar ist, und einer Beleuchtungseinrichtung (5), die zumindest in Richtung senkrecht über dem aus dem Maschinengehäuse (2) ragenden Wellenende (1) in einen Ausleuchtbereich (10) Licht aussendet,
dadurch **gekennzeichnet,**
daß der Ausleuchtbereich (10) ein über dem Wellenende (1) innen liegender Teil einer Felgenschüssel des am Wellenende (1) aufspannbaren Kraftfahrzeugrades (4) ist und daß das Licht aus dem über dem Ausleuchtbereich (10) liegenden Raum ausgeblendet ist.

2. Radauswuchtmaschine nach Anspruch 1, dadurch gekennzeichnet, daß ein Ein-Ausschalter (8) zum Ein- und Ausschalten der Beleuchtungseinrichtung (5) in Abhängigkeit von einer jeweiligen Betriebsbedienung vorgesehen ist.

3. Radauswuchtmaschine nach Anspruch 1 oder 2, dadurch gekennzeichnet, daß die Beleuchtungseinrichtung (5) einen Reflektor (8) aufweist, der das von einer Glühlampe (9) ausgesendete Licht in den Ausleuchtbereich (10) richtet.

## Claims

1. A wheel balancing machine having a main shaft which is mounted in an unbalance measuring arrangement disposed in a machine housing (2) and of which there projects out of the machine housing a shaft end (1) to which a motor vehicle wheel (4) can be fixed by means of a clamping device, and a lighting device which emits light into an illumination region (10) at least in a direction perpendicularly over the shaft end (1) which projects out of the machine housing (2),
characterised in that
the illumination region (10) is a part, which is disposed at the inside over the shaft end (1), of a wheel rim dish of the motor vehicle wheel (4) which can be clamped to the shaft end (1), and that the light is screened off from the space above the illumination region (10).

2. A wheel balancing machine according to claim 1 characterised in that there is provided an on-off switch (8) for switching the lighting device (5) on and off in dependence on a respective operating procedure.

3. A wheel balancing machine according to claim 1 or claim 2 characterised in that the lighting device (5) has a reflector (8) which directs the light emitted by an incandescent lamp (9) into the illumination region (10).

## Revendications

1. Equilibreuse de roue comportant un arbre principal, qui est monté dans un dispositif de mesure de balourd monté dans une enveloppe (2) de la machine et dont un bout (1) d'arbre, auquel une roue (4) de véhicule automobile peut être fixée au moyen d'un dispositif de serrage, dépasse de l'enveloppe de la machine, et un dispositif (5) d'éclairage, qui émet de la lumière dans une direction s'étendant perpendiculairement au-dessus du bout (1) d'arbre dépassant une enveloppe (2) de la machine, vers une zone (10) d'éclairage, caractérisée en ce que la zone (10) d'éclairage est une partie, se trouvant à l'intérieur au-dessus du bout (1) d'arbre, d'un disque de jante de la roue (4) de véhicule automobile pouvant être serrée sur le bout (1) d'arbre, et en ce qu'il est fait écran à la lumière provenant de la zone se trouvant au-dessus de la zone (10) d'éclairage.

2. Equilibreuse de roue suivant la revendication 1, caractérisée en ce qu'il est prévu un interrupteur (8) pour brancher et débrancher le dispositif (5) d'éclairage en fonction d'une condition de fonctionnement.

3. Equilibreuse de roue suivant la revendication 1 ou 2, caractérisée en ce que le dispositif (5) d'éclairage comporte un réflecteur (8), qui dirige la lumière émise par une lampe (9) à incandescence vers la zone (10) d'éclairage.
